(19) Europäisches Patentamt
European Patent Office
Office européen des brevets

(11) **EP 3 372 126 B1**

(12) **FASCICULE DE BREVET EUROPEEN**

(45) Date de publication et mention
de la délivrance du brevet:
**22.05.2024 Bulletin 2024/21**

(21) Numéro de dépôt: **18160198.0**

(22) Date de dépôt: **06.03.2018**

(51) Classification Internationale des Brevets (IPC):
***A47J 37/07*** *(2006.01)*

(52) Classification Coopérative des Brevets (CPC):
**A47J 37/0786; A47J 37/07; A47J 37/079**

(54) **APPAREIL DE CUISSON**

KOCHGERÄT

COOKING APPLIANCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.03.2017 FR 1751853**

(43) Date de publication de la demande:
**12.09.2018 Bulletin 2018/37**

(73) Titulaire: **Inovalp**
**38350 Susville (FR)**

(72) Inventeurs:
• **DENANCE, Yann**
**38350 NANTES EN RATTIER (FR)**

• **PAULIN, Kevin**
**38770 MONTEYNARD (FR)**
• **FAIVRE, Elodie**
**38970 QUET EN BEAUMONT (FR)**

(74) Mandataire: **INNOV-GROUP**
**310, avenue Berthelot**
**69372 Lyon Cedex 08 (FR)**

(56) Documents cités:
**EP-A1- 0 824 886    FR-A1- 2 744 618
FR-A3- 2 603 791    US-A- 4 321 907
US-A- 4 510 916    US-A- 5 469 835**

## Description

### Domaine technique

L'invention se rapporte au domaine technique des appareils de cuisson, plus particulièrement du type comportant un brûleur à granulés de bois.

L'invention trouve notamment son application dans la cuisson d'extérieur avec l'obtention d'appareils de cuisson de type plancha ou barbecue.

### Etat de la technique antérieure

Un appareil de cuisson connu de l'état de la technique, comporte :

- un conduit de combustion, adapté pour recevoir des granulés de bois, et présentant une première zone d'extrémité et une seconde zone d'extrémité opposée ;
- un ensemble de couronnes d'orifices, ménagé en périphérie du conduit de combustion ;
- des moyens d'alimentation, agencés pour alimenter en air le conduit de combustion à travers l'ensemble de couronnes d'orifices ;
- une cuve, montée sur la première zone d'extrémité du conduit de combustion ;
- une grille de combustion, agencée dans la seconde zone d'extrémité du conduit de combustion de manière à supporter les granulés de bois et autoriser un passage des cendres issues de la combustion. De tels appareils sont divulgués dans les documents US 4,510,916 et EP 0 824 886 A1.

Un tel appareil de cuisson de l'état de la technique utilise un brûleur à granulés de bois, formé par le conduit de combustion et la grille de combustion. Un brûleur à granulés de bois est avantageux notamment en termes de rendement et de facilité d'utilisation. Dans le cas d'un appareil de cuisson de type plancha, la cuisson s'effectue par conduction de la chaleur produite par le brûleur. Dans le cas d'un appareil de cuisson de type barbecue, la cuisson s'effectue par convection de la chaleur produite par le brûleur. La chaleur est issue de la combustion des granulés de bois (combustible) avec le dioxygène de l'air (comburant), réaction chimique exothermique. La cuve permet de répartir les fumées sur la plaque de cuisson.

Un tel appareil de cuisson de l'état de la technique n'est pas entièrement satisfaisant dans la mesure où il a été constaté une combustion incomplète des granulés de bois au fur et à mesure de leur combustion, c'est-à-dire au fur et à mesure de la descente des granulés de bois dans le conduit de combustion. Cette combustion incomplète des granulés de bois est préjudiciable non seulement en termes d'efficacité, mais aussi dans la mesure où cette combustion incomplète génère beaucoup de résidus à la fin de la combustion, sous forme de charbon et de granulés non brûlés entièrement.

### Exposé de l'invention

L'invention vise à remédier en tout ou partie aux inconvénients précités. A cet effet, l'invention a pour objet un appareil de cuisson tel que défini dans la revendication 1.

Ainsi, un tel appareil de cuisson selon l'invention permet d'obtenir une combustion complète des granulés de bois le long du conduit de combustion grâce à une répartition des couronnes d'orifices avec des aires totales différenciées et ajustées. En effet, les aires totales différenciées et ajustées des couronnes d'orifices permettent de moduler le volume d'air le long du conduit de manière à conserver une flamme au fur et à mesure de la combustion des granulés de bois, c'est-à-dire au fur et à mesure de la descente des granulés de bois dans le conduit de combustion. Un volume d'air insuffisant conduit à une combustion incomplète par manque de comburant tandis qu'un volume d'air en excès important est susceptible de diluer les gaz et donc de réduire la température des fumées et donc la température sur la plaque de cuisson.

### <u>Définitions</u>

- Par «couronne d'orifices », on entend des orifices répartis en périphérie du conduit de combustion selon un plan transversal au conduit, le conduit s'étendant suivant un axe longitudinal. Par « transversal », on entend suivant une direction perpendiculaire à l'axe longitudinal.
- Par « aire totale », on entend la somme des aires des orifices (chaque orifice délimitant une surface) appartenant à une couronne donnée d'orifices.

Ainsi, un avantage procuré par une série telle que définie dans la revendication 1 est d'alterner successivement :

- une alimentation importante en air (par la première couronne d'orifice présentant la première aire totale) permettant une combustion totale avec un excès de comburant.
- une alimentation plus faible en air (par la deuxième couronne d'orifices présentant la deuxième aire totale) permettant de maintenir une flamme et une température supérieure à la température de combustion à proximité de la grille de combustion.

Selon une caractéristique de l'invention, les première et deuxième couronnes d'orifices de la série sont séparées d'une distance comprise entre 3 cm et 10 cm, de préférence comprise entre 5 cm et 7 cm.

Ainsi, un avantage procuré par une telle distance est de pouvoir maintenir une flamme satisfaisante entre deux couronnes d'orifices successives afin d'obtenir une combustion complète des granulés de bois.

Selon une caractéristique de l'invention, l'ensemble de couronnes d'orifices comporte une couronne d'orifices supérieure, agencée au-dessus de la série, et présentant la première aire totale ; la couronne d'orifices supérieure étant agencée à une distance, notée h, de la première zone d'extrémité, la distance h étant déterminée selon le tirage thermique souhaité.

Ainsi, un avantage procuré est d'ajuster l'alimentation primaire en air, situé dans le conduit de combustion au-dessus de la couronne d'orifices supérieure (le haut de l'empilement des granulés de bois s'étendant initialement dans le conduit de combustion au niveau de la couronne d'orifices supérieure), et ce afin d'obtenir le tirage souhaité. La couronne d'orifices supérieure présente la première aire totale afin d'obtenir une alimentation importante en air et un bon démarrage pour la combustion.

Selon une caractéristique de l'invention, l'ensemble de couronnes d'orifices comporte une couronne d'orifices inférieure, agencée au-dessous de la série et au-dessus de la grille de combustion, et présentant la première aire totale.

Ainsi, un avantage procuré par une telle couronne d'orifices inférieure est d'obtenir une alimentation importante en air au-dessus de la grille de combustion.

Selon une caractéristique de l'invention, les orifices de chaque couronne d'orifices sont répartis uniformément autour du conduit de combustion.

Ainsi, un avantage procuré est d'améliorer l'homogénéité de l'alimentation en air dans le conduit de combustion.

Selon une caractéristique de l'invention, les orifices de chaque couronne d'orifices présentent une aire identique, et dans lequel l'ensemble de couronnes d'orifices est réparti le long du conduit de combustion de sorte que les couronnes d'orifices présentent des densités surfaciques différenciées et ajustées le long du conduit de combustion de manière à maintenir une combustion complète des granulés de bois.

Ainsi, un avantage procuré est la facilité de fabrication des couronnes d'orifices.

Selon une caractéristique de l'invention, la grille de combustion est montée amovible dans la seconde zone d'extrémité du conduit de combustion.

Ainsi, un avantage procuré est de faciliter l'entretien de la grille de combustion.

Selon une caractéristique de l'invention, les moyens d'alimentation comportent un conduit d'alimentation agencé de sorte que le conduit d'alimentation et le conduit de combustion sont coaxiaux.

Ainsi, un avantage procuré est de pouvoir aisément alimenter en air le conduit de combustion par l'air se déplaçant entre le conduit d'alimentation et le conduit de combustion. En outre, un tel conduit d'alimentation permet de dissimuler le conduit de combustion pour des raisons esthétiques.

Selon une caractéristique de l'invention, le conduit d'alimentation et le conduit de combustion sont séparés d'une distance comprise entre 15 mm et 30 mm.

Ainsi, un avantage procuré par une telle distance de séparation est d'obtenir un volume d'air suffisamment important pour apporter un excès de comburant dans le conduit de combustion tout en conservant une température supérieure à la température de combustion à proximité de la grille de combustion.

## Brève description des dessins

D'autres caractéristiques et avantages apparaîtront dans l'exposé détaillé de différents modes de réalisation de l'invention, l'exposé étant assorti d'exemples et de référence aux dessins joints.

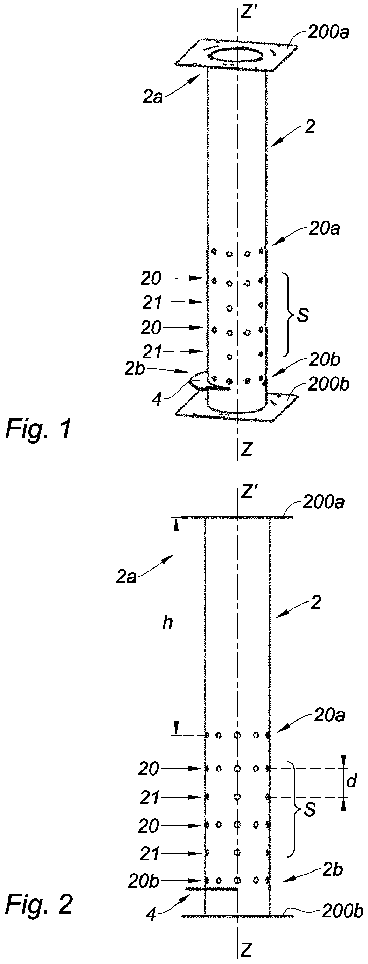

Figure 1 est une vue schématique partielle, en perspective de trois-quarts, d'un appareil de cuisson selon l'invention, illustrant un mode de réalisation du conduit de combustion.
Figure 2 est une vue schématique partielle, de face, de l'appareil de cuisson illustré à la figure 1.

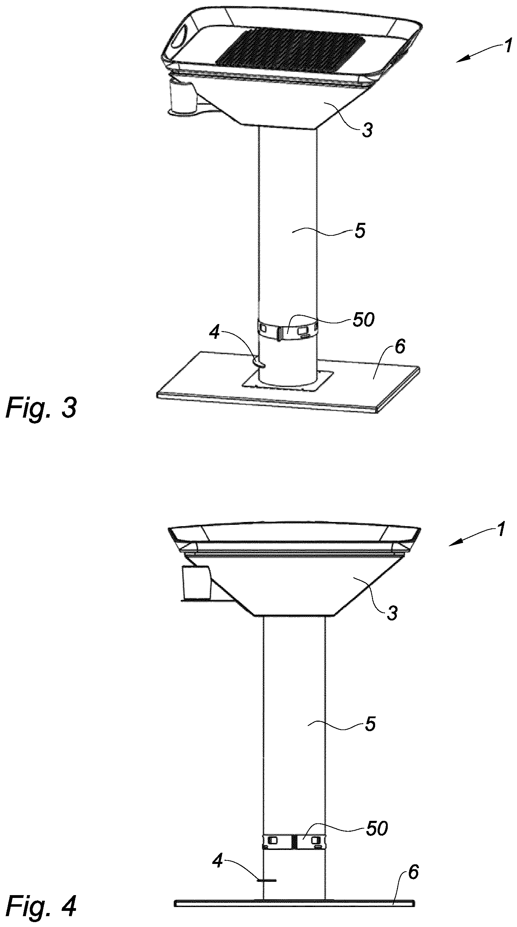

Figure 3 est une vue schématique, en perspective de trois-quarts, d'un appareil de cuisson selon l'invention.

Figure 4 est une vue schématique, de face, de l'appareil de cuisson illustré à la figure 3.

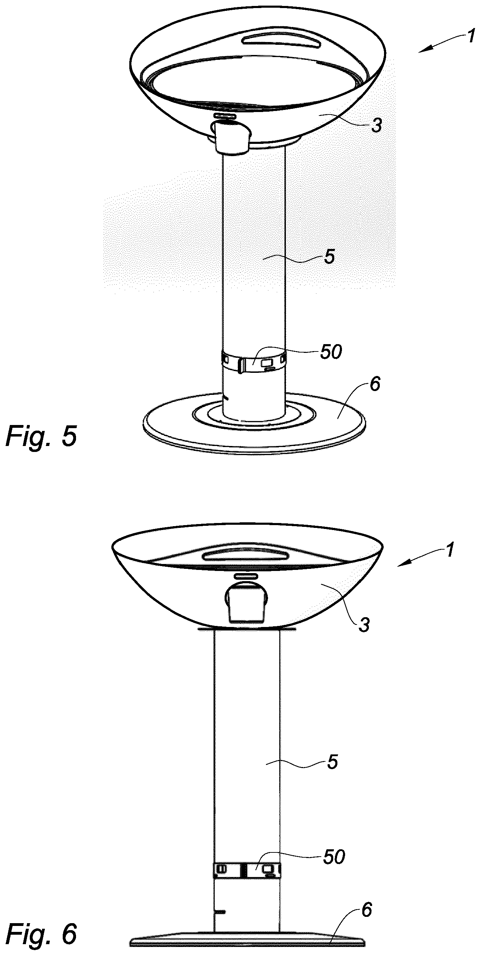

Figure 5 est une vue schématique, en perspective de trois-quarts, d'un appareil de cuisson selon l'invention.
Figure 6 est une vue schématique, de face, de l'appareil de cuisson illustré à la figure 5.

**Exposé détaillé des modes de réalisation**

Les éléments identiques ou assurant la même fonction porteront les mêmes références pour les différents modes de réalisation, par souci de simplification.

Un objet de l'invention est un appareil 1 de cuisson, comportant :

- un conduit de combustion 2, adapté pour recevoir des granulés de bois, et présentant une première zone d'extrémité 2a et une seconde zone d'extrémité 2b opposée ;
- un ensemble de couronnes d'orifices 20, 20a, 20b, 21, ménagé en périphérie du conduit de combustion 2 ;
- des moyens d'alimentation, agencés pour alimenter en air le conduit de combustion 2 à travers l'ensemble de couronnes d'orifices 20, 20a, 20b, 21 ;
- une cuve 3, montée sur la première zone d'extrémité 2a du conduit de combustion 2 ;
- une grille de combustion 4, agencée dans la seconde zone d'extrémité 2b du conduit de combustion 2 de manière à supporter les granulés de bois et autoriser un passage des cendres issues de la combustion.

L'ensemble de couronnes d'orifices 20, 20a, 20b, 21 est réparti le long du conduit de combustion 2 de sorte que les couronnes d'orifices 20, 20a, 20b, 21 présentent des aires totales différenciées et ajustées le long du conduit de combustion 2 de manière à maintenir une combustion complète des granulés de bois.

**Conduit de combustion**

Le conduit de combustion 2 s'étend suivant un axe longitudinal Z'-Z. Le conduit de combustion 2 présente la forme d'un tube. Le conduit de combustion 2 présente préférentiellement une section transversale circulaire. Par « transversale », on entend une section selon une direction perpendiculaire à l'axe longitudinal Z'-Z. A titre d'exemple non limitatif, le conduit de combustion 2 peut présenter un diamètre compris entre 90 mm et 153 mm.

La première zone d'extrémité 2a du conduit de combustion 2 est ouverte de manière à recevoir les granulés de bois.

Le conduit de combustion 2 peut comporter :

- une plaque supérieure 200a montée sur la première zone d'extrémité 2a ;
- une plaque inférieure 200b montée sur la seconde zone d'extrémité 2b.

**Ensemble de couronnes d'orifices**

Les orifices de chaque couronne d'orifices 20, 20a, 20b, 21 sont répartis en périphérie du conduit de combustion 2 selon un plan transversal au conduit de combustion 2, c'est-à-dire selon une direction perpendiculaire à l'axe Z'-Z.

L'ensemble de couronnes d'orifices 20, 20a, 20b, 21 est avantageusement réparti le long du conduit de combustion selon une série S comprenant successivement :

- une première couronne d'orifices 20 présentant une première aire totale ;
- une deuxième couronne d'orifices 21 présentant une deuxième aire totale strictement inférieure à la première aire totale.

A titre d'exemple non limitatif, la première aire totale peut être comprise entre 750 mm$^2$ et 800 mm$^2$, et la deuxième aire totale peut être comprise entre 350 mm$^2$ et 400 mm$^2$. Les première et deuxième aires totales dépendent des dimensions du conduit de combustion 2. Si l'on note respectivement D, A1, et A2 le diamètre du conduit de combustion 2 (en mm), la première aire totale (en mm$^2$), et la deuxième aire totale (en mm$^2$), A1 et A2 vérifient avantageusement la relation suivante :

$$5\,D < A1 < 10\,D \; ; \; et \; 2\,D < A2 < 6\,D \; ; \; avec \; A2 < A1.$$

En d'autres termes, l'ensemble de couronnes d'orifices 20, 20a, 20b, 21 comporte avantageusement une série S comprenant successivement au moins deux couronnes d'orifices adjacentes. Les deux couronnes d'orifices adjacentes comportent la première couronne d'orifices 20 présentant la première aire totale, et la deuxième couronne d'orifices 21 présentant la deuxième aire totale strictement inférieure à la première aire totale.

Les première et deuxième couronnes d'orifices 20, 21 de la série S sont avantageusement séparées d'une distance d comprise entre 3 cm et 10 cm, plus préférentiellement comprise entre 5 cm et 7 cm.

L'ensemble de couronnes d'orifices 20, 20a, 20b, 21 comporte avantageusement une couronne d'orifices supérieure 20a, agencée au-dessus de la série S, et présentant la première aire totale. La couronne d'orifices supérieure 20a est agencée à une distance, notée h, de la première zone d'extrémité 2a, la distance h étant déterminée selon le tirage thermique souhaité. A titre d'exemple non limitatif, la distance h peut être comprise entre 350 mm et 400 mm. La couronne d'orifices supérieure 20a est avantageusement séparée de la série S d'une distance comprise entre 3 cm et 10 cm, plus préférentiellement comprise entre 5 cm et 7 cm.

L'ensemble de couronnes d'orifices 20, 20a, 20b, 21 comporte avantageusement une couronne d'orifices inférieure 20b, agencée au-dessous de la série S et au-dessus de la grille de combustion 4, et présentant la première aire totale. La couronne d'orifices inférieure 20b est avantageusement séparée de la série S d'une distance comprise entre 3 cm et 10 cm, plus préférentiellement comprise entre 5 cm et 7 cm.

Les orifices de chaque couronne d'orifices 20, 20a, 20b, 21 présentent avantageusement une aire identique, et l'ensemble de couronnes d'orifices 20, 20a, 20b, 21 est réparti le long du conduit de combustion 2 de sorte que les couronnes d'orifices 20, 20a, 20b, 21 présentent des densités surfaciques différenciées et ajustées le long du conduit de combustion 2 de manière à maintenir une combustion complète des granulés de bois.

## Alimentation en air du conduit de combustion

Les moyens d'alimentation comportent avantageusement un conduit d'alimentation 5 agencé de sorte que le conduit d'alimentation 5 et le conduit de combustion 2 sont coaxiaux. Le conduit d'alimentation 5 présente préférentiellement une section transversale circulaire. A titre d'exemple non limitatif, le conduit d'alimentation 5 peut présenter un diamètre compris entre 140 mm et 160 mm.

Le conduit d'alimentation 5 et le conduit de combustion 2 sont avantageusement séparés d'une distance comprise entre 15 mm et 30 mm. Autrement dit, le conduit d'alimentation 5 et le conduit de combustion 2 sont avantageusement séparés d'une distance radiale comprise entre 15 mm et 30 mm.

Le conduit d'alimentation 5 est avantageusement muni d'une bague 50 montée mobile en rotation autour de l'axe longitudinal Z'-Z. La bague 50 permet de régler le débit d'air (et par là-même la puissance du brûleur) qui arrivera entre le conduit d'alimentation 5 et le conduit de combustion 2.

## Cuve

La cuve 3 est préférentiellement montée sur la première zone d'extrémité 2a du conduit de combustion 2 par vissage sur la plaque supérieure 200a.

La cuve 3 peut présenter une section transversale trapézoïdale ou toute autre forme permettant de répartir de manière homogène les fumées issues de la combustion sur la plaque de cuisson.

## Grille de combustion

La grille de combustion 4 est avantageusement montée amovible dans la seconde zone d'extrémité 2b du conduit de combustion 2. Pour ce faire, une fente est ménagée en périphérie du conduit de combustion 2, dans la seconde zone d'extrémité 2b. La grille de combustion 4 présente une partie en saillie du conduit de combustion 2, permettant de retirer aisément la grille de combustion 4.

## Appareil de cuisson

L'appareil 1 de cuisson comporte avantageusement un pied 6 monté à la seconde zone d'extrémité 2b du conduit de combustion 2 par vissage sur la plaque inférieure 200b.

L'appareil 1 de cuisson peut être de type plancha ou de type barbecue. L'ensemble comportant le conduit de combustion 2 et la grille de combustion 4 forme un brûleur à granulés de bois. Il est à noter que l'appareil 1 de cuisson peut comporter plusieurs brûleurs.

Dans le cas d'un appareil 1 de cuisson de type plancha, la cuisson s'effectue par conduction de la chaleur produite par le brûleur. Dans le cas d'un appareil 1 de cuisson de type barbecue, la cuisson s'effectue par convection de la chaleur produite par le brûleur. La chaleur est issue de la combustion des granulés de bois (combustible) avec le dioxygène de l'air (comburant), réaction chimique exothermique.

L'invention ne se limite pas aux modes de réalisation exposés. L'homme du métier est mis à même de considérer leurs combinaisons techniquement opérantes, et de leur substituer des équivalents, le tout dans le cadre défini par les revendications.

**Revendications**

1. Appareil (1) de cuisson, comportant :

   - un conduit de combustion (2), adapté pour recevoir des granulés de bois, et présentant une première zone d'extrémité (2a) et une seconde zone d'extrémité (2b) opposée, le conduit de combustion (2) s'étendant suivant un axe longitudinal (Z'-Z) ;
   - un ensemble de couronnes d'orifices (20, 20a, 20b, 21), ménagé en périphérie du conduit de combustion (2) ;
   - des moyens d'alimentation, agencés pour alimenter en air le conduit de combustion (2) à travers l'ensemble de couronnes d'orifices (20, 20a, 20b, 21), les moyens d'alimentation comportant un conduit d'alimentation (5) agencé de sorte que le conduit d'alimentation (5) et le conduit de combustion (2) sont coaxiaux, le conduit d'alimentation (5) étant muni d'une bague (50) montée mobile en rotation autour de l'axe longitudinal (Z'-Z) pour régler le débit d'air arrivant entre le conduit d'alimentation (5) et le conduit de combustion (2) ;
   - une cuve (3), montée sur la première zone d'extrémité (2a) du conduit de combustion (2) ;
   - une grille de combustion (4), agencée dans la seconde zone d'extrémité (2b) du conduit de combustion (2) de manière à supporter les granulés de bois et autoriser un passage des cendres issues de la combustion ;

   l'ensemble de couronnes d'orifices (20, 20a, 20b, 21) est réparti le long du conduit de combustion (2), au-dessus de la grille de combustion (4), de sorte que les couronnes d'orifices (20, 20a, 20b, 21) présentent des aires totales différenciées et ajustées le long du conduit de combustion (2) de manière à moduler l'air le long du conduit de combustion (2) pour maintenir une combustion complète des granulés de bois au fur et à mesure de la descente des granulés de bois dans le conduit de combustion (2) lors de leur combustion, l'ensemble de couronnes d'orifices (20, 20a, 20b, 21) étant réparti le long du conduit de combustion (2) selon une série (S) comprenant successivement :

   - une première couronne d'orifices (20) présentant une première aire totale ;
   - une deuxième couronne d'orifices (21) présentant une deuxième aire totale strictement inférieure à la première aire totale.

2. Appareil (1) de cuisson selon la revendication 1, dans lequel les première et deuxième couronnes d'orifices (20, 21) de la série (S) sont séparées d'une distance (d) comprise entre 3 cm et 10 cm, de préférence comprise entre 5 cm et 7 cm.

3. Appareil (1) de cuisson selon la revendication 1 ou 2, dans lequel l'ensemble de couronnes d'orifices (20, 20a, 20b, 21) comporte une couronne d'orifices supérieure (20a), agencée au-dessus de la série (S), et présentant la première aire totale ; la couronne d'orifices supérieure (20a) étant agencée à une distance, notée h, de la première zone d'extrémité (2a), la distance h étant déterminée selon le tirage thermique souhaité.

4. Appareil (1) de cuisson selon l'une des revendications 1 à 3, dans lequel l'ensemble de couronnes d'orifices (20, 20a, 20b, 21) comporte une couronne d'orifices inférieure (20b), agencée au-dessous de la série (S) et au-dessus de la grille de combustion (4), et présentant la première aire totale.

5. Appareil (1) de cuisson selon l'une des revendications 1 à 4, dans lequel les orifices de chaque couronne d'orifices (20, 20a, 20b, 21) sont répartis uniformément autour du conduit de combustion (2).

6. Appareil (1) de cuisson selon l'une des revendications 1 à 5, dans lequel les orifices de chaque couronne d'orifices (20, 20a, 20b, 21) présentent une aire identique, et dans lequel l'ensemble de couronnes d'orifices (20, 20a, 20b, 21) est réparti le long du conduit de combustion de sorte que les couronnes d'orifices (20, 20a, 20b, 21) présentent des densités surfaciques différenciées et ajustées le long du conduit de combustion (2) de manière à maintenir une combustion complète des granulés de bois.

7. Appareil (1) de cuisson selon l'une des revendications 1 à 6, dans lequel la grille de combustion (4) est montée amovible dans la seconde zone d'extrémité (2b) du conduit de combustion (2).

8. Appareil (1) de cuisson selon l'une des revendications 1 à 7, dans lequel le conduit d'alimentation (5) et le conduit de combustion (2) sont séparés d'une distance radiale comprise entre 15 mm et 30 mm.

**Patentansprüche**

1. Kochgerät (1), umfassend:

   - einen Verbrennungskanal (2), der dazu eingerichtet ist, Holzpellets aufzunehmen, und einen ersten Endbereich (2a) und einen gegenüberliegenden zweiten Endbereich (2b) aufweist, wobei sich der Verbrennungskanal (2) entlang einer Längsachse (Z'-Z) erstreckt;
   - eine Anordnung von Lochkränzen (20, 20a, 20b, 21), die im Umfang des Verbrennungskanals (2) ausgebildet ist;
   - Versorgungsmittel, die dazu eingerichtet sind, den Verbrennungskanal (2) durch die Anordnung von Lochkränzen (20, 20a, 20b, 21) hindurch mit Luft zu versorgen, wobei die Versorgungsmittel einen Versorgungskanal (5) umfassen, der so angeordnet ist, dass der Versorgungskanal (5) und der Verbrennungskanal (2) koaxial sind, wobei der Versorgungskanal (5) mit einem Ring (50) ausgestattet ist, der drehbeweglich um die Längsachse (Z'-Z) angebracht ist, um die zwischen dem Versorgungskanal (5) und dem Verbrennungskanal (2) einströmende Luftmenge zu regeln;
   - einen Behälter (3), der auf dem ersten Endbereich (2a) des Verbrennungskanals (2) angebracht ist;
   - einen Verbrennungsrost (4), der im zweiten Endbereich (2b) des Verbrennungskanals (2) so angeordnet ist, dass er die Holzpellets trägt und ein Hindurchfallen der aus der Verbrennung resultierenden Asche ermöglicht;

   wobei die Anordnung von Lochkränzen (20, 20a, 20b, 21) entlang des Verbrennungskanals (2), oberhalb des Verbrennungsrosts (4), so verteilt ist, dass die Lochkränze (20, 20a, 20b, 21) Gesamtflächen aufweisen, die sich unterscheiden und entlang des Verbrennungskanals (2) so angepasst sind, dass sie die Luft entlang des Verbrennungskanals (2) modulieren, um eine vollständige Verbrennung der Holzpellets im Verlaufe der Abwärtsbewegung der Holzpellets im Verbrennungskanals (2) während ihrer Verbrennung aufrechtzuerhalten, wobei die Anordnung von Lochkränzen (20, 20a, 20b, 21) entlang des Verbrennungskanals (2) gemäß einer Reihe (S) verteilt ist, die nacheinander umfasst:

   - einen ersten Lochkranz (20), der eine erste Gesamtfläche aufweist;
   - einen zweiten Lochkranz (21), der eine zweite Gesamtfläche aufweist, die streng kleiner als die erste Gesamtfläche ist.

2. Kochgerät (1) nach Anspruch 1, wobei der erste und der zweite Lochkranz (20, 21) der Reihe (S) durch einen Abstand (d) zwischen 3 cm und 10 cm, vorzugsweise zwischen 5 cm und 7 cm, getrennt sind.

3. Kochgerät (1) nach Anspruch 1 oder 2, wobei die Anordnung von Lochkränzen (20, 20a, 20b, 21) einen oberen Lochkranz (20a) umfasst, der oberhalb der Reihe (S) angeordnet ist und die erste Gesamtfläche aufweist; wobei der obere Lochkranz (20a) in einem mit h bezeichneten Abstand vom ersten Endbereich (2a) angeordnet ist, wobei der Abstand h entsprechend dem gewünschten thermischen Auftrieb bestimmt wird.

4. Kochgerät (1) nach einem der Ansprüche 1 bis 3, wobei die Anordnung von Lochkränzen (20, 20a, 20b, 21) einen unteren Lochkranz (20b) umfasst, der unterhalb der Reihe (S) und oberhalb des Verbrennungsrosts (4) angeordnet ist und die erste Gesamtfläche aufweist.

5. Kochgerät (1) nach einem der Ansprüche 1 bis 4, wobei die Löcher jedes Lochkranzes (20, 20a, 20b, 21) gleichmäßig um den Verbrennungskanal (2) herum verteilt sind.

6. Kochgerät (1) nach einem der Ansprüche 1 bis 5, wobei die Löcher jedes Lochkranzes (20, 20a, 20b, 21) eine identische Fläche aufweisen und wobei die Anordnung von Lochkränzen (20, 20a, 20b, 21) entlang des Verbrennungskanals so verteilt ist, dass die Lochkränze (20, 20a, 20b, 21) Flächendichten aufweisen, die sich unterscheiden und entlang des Verbrennungskanals (2) so angepasst sind, dass sie eine vollständige Verbrennung der Holzpellets aufrechterhalten.

7. Kochgerät (1) nach einem der Ansprüche 1 bis 6, wobei der Verbrennungsrost (4) herausnehmbar im zweiten Endbereich (2b) des Verbrennungskanals (2) angebracht ist.

**8.** Kochgerät (1) nach einem der Ansprüche 1 bis 7, wobei der Versorgungskanal (5) und der Verbrennungskanal (2) durch einen radialen Abstand zwischen 15 mm und 30 mm getrennt sind.

**Claims**

**1.** Cooking appliance (1) comprising:

- a combustion pipe (2), adapted to receive wood pellets, and having a first end zone (2a) and an opposite second end zone (2b), the combustion pipe (2) extending along a longitudinal axis (Z'-Z);
- a set of rings of orifices (20, 20a, 20b, 21), provided at the periphery of the combustion pipe (2);
- supply means, arranged to supply air to the combustion pipe (2) through the set of rings of orifices (20, 20a, 20b, 21), the supply means comprising a supply pipe (5) arranged such that the supply pipe (5) and the combustion pipe (2) are coaxial, the supply pipe (5) being provided with a ring (50) mounted with the ability to rotate about the longitudinal axis (Z'-Z) so as to regulate the air flow rate arriving between the supply pipe (5) and the combustion pipe (2);
- a tank (3), mounted on the first end zone (2a) of the combustion pipe (2);
- a combustion grate (4), arranged in the second end zone (2b) of the combustion pipe (2) so as to support the wood pellets and to allow passage of the ashes resulting from the combustion;

the set of rings of orifices (20, 20a, 20b, 21) is distributed along the combustion pipe (2), above the combustion grate (4), such that the rings of orifices (20, 20a, 20b, 21) have differentiated and adjusted total areas along the combustion pipe (2) so as to modulate the air along the combustion pipe (2) in order to maintain complete combustion of the wood pellets as the wood pellets descend in the combustion pipe (2) during their combustion, the set of rings of orifices (20, 20a, 20b, 21) being distributed along the combustion pipe (2) according to a series (S) comprising in succession:

- a first ring of orifices (20) having a first total area;
- a second ring of orifices (21) having a second total area that is strictly smaller than the first total area.

**2.** Cooking appliance (1) according to Claim 1, wherein the first and second rings of orifices (20, 21) of the series (S) are separated by a distance (d) of between 3 cm and 10 cm, preferably of between 5 cm and 7 cm.

**3.** Cooking appliance (1) according to Claim 1 or 2, wherein the set of rings of orifices (20, 20a, 20b, 21) comprises an upper ring of orifices (20a), arranged above the series (S), and having the first total area; the upper ring of orifices (20a) being arranged at a distance, denoted h, from the first end zone (2a), the distance h being determined according to the desired stack effect.

**4.** Cooking appliance (1) according to one of Claims 1 to 3, wherein the set of rings of orifices (20, 20a, 20b, 21) comprises a lower ring of orifices (20b), arranged below the series (S) and above the combustion grate (4), and having the first total area.

**5.** Cooking appliance (1) according to one of Claims 1 to 4, wherein the orifices of each ring of orifices (20, 20a, 20b, 21) are distributed uniformly around the combustion pipe (2).

**6.** Cooking appliance (1) according to one of Claims 1 to 5, wherein the orifices of each ring of orifices (20, 20a, 20b, 21) have an identical area, and wherein the set of rings of orifices (20, 20a, 20b, 21) is distributed along the combustion pipe such that the rings of orifices (20, 20a, 20b, 21) have differentiated and adjusted surface densities along the combustion pipe (2) so as to maintain complete combustion of the wood pellets.

**7.** Cooking appliance (1) according to one of Claims 1 to 6, wherein the combustion grate (4) is removably mounted in the second end zone (2b) of the combustion pipe (2).

**8.** Cooking appliance (1) according to one of Claims 1 to 7, wherein the supply pipe (5) and the combustion pipe (2) are separated by a radial distance of between 15 mm and 30 mm.

Fig. 1

Fig. 2

Fig. 3

Fig. 4

Fig. 5

Fig. 6

## RÉFÉRENCES CITÉES DANS LA DESCRIPTION

**Documents brevets cités dans la description**

- US 4510916 A
- EP 0824886 A1